# EUROPEAN PATENT SPECIFICATION

(11) **EP 2 461 170 B1**
(45) Date of publication and mention of the grant of the patent: **30.08.2017**
(21) Application number: 10306341.8
(22) Date of filing: 02.12.2010
(51) Int. Cl.: G01R 31/11, H04B 3/46, H04L 12/26, H04M 3/30

(54) **PHYSICAL FAULT DOMAIN DETERMINATION MODULE AND METHOD**
MODUL UND VERFAHREN ZUR BESTIMMUNG EINER PHYSIKALISCHEN FEHLERDOMÄNE
MODULE DE DÉTERMINATION DU DOMAINE DE DÉFAUT PHYSIQUE ET PROCÉDÉ

(43) Date of publication of application: 06.06.2012
(73) Proprietor: ALCATEL LUCENT, 92100 Boulogne-Billancourt (FR)
(72) Inventor: Dupuis, Nicolas, 4051 Chaudfontaine (BE); Drooghaag, Benoît, BELGIUM, Ophain-Bois-Seigneur-Isaac (BE)
(74) Representative: ALU Antw Patent Attorneys

(56) References cited:
- EP-A1- 1 936 931
- "Single-ended line testing for digital subscriber lines DSL- G.996.2", SERIES G: TRANSMISSION SYSTEMS AND MEDIA, DIGITAL SYSTEMS AND NETWORKS - DIGITAL SECTIONS AND DIGITAL LINE SYSTEM - ACCESS NETWORKS, May 2009 (2009-05), XP002633509, Retrieved from the Internet: URL:www.catr.cn/radar/itut/201007/P0201007 07648582154399.pdf [retrieved on 2011-04-15]

## Description

The present invention relates to a method to determine a physical fault domain and related module.

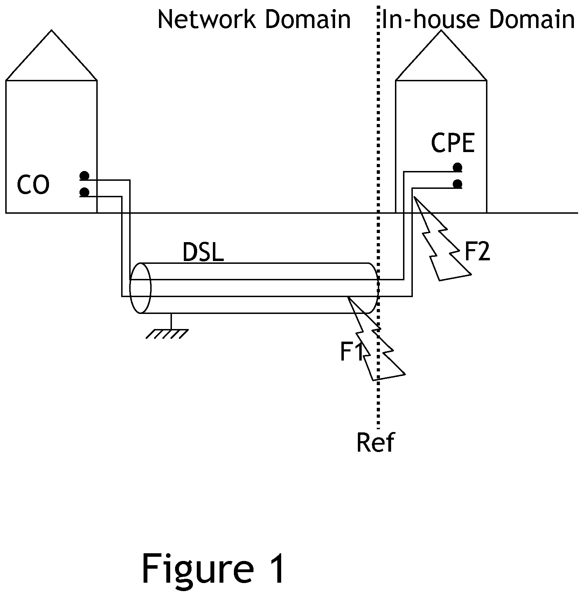

Such a method and module are already known in the art. Indeed, with the market development of IPTV solutions, Video-On-Demand offers or Triple-play services, both the system performances and the customer support become more and more exigent. As the physical link, which transports the information through wire lines up to the end user, is known to be the bottle neck for the Quality of Service, systems are developed to both remotely diagnose sources of physical problems and take actions to improve the performances. This helps the operators to gain in service quality as well as to save money and time by not involving human interventions for all types of requests. One of the basic concepts consists of detecting the presence of a fault on the line and to localize whether this fault is present in-house or in the operator's network. This is called domain separation and is illustrated in Figure 1. The concept of domain separation is indeed a key knowledge that operators would like to have in order to detect whether a fault is located in their own network or in the customer's house. The improvement of such inference is appreciated by the operators because of the underlying responsibility domain: if the fault is on the operator network, the operator is responsible and will have to pay for the repair actions; if the fault is in-house, the end-customer is responsible for it. If the customer is not able to repair himself, the operator will send a technician but will charge some extra cost to the customer for the intervention.

In order to perform this function, a reference measurement, i.e. unimpaired-loop length estimation, is required to compare with respect to an actual estimation in order to infer about a potential fault and about its location for domain separation. For that purpose, testing solutions already exist but suffer from different drawbacks. A critical drawback is the loop length reference estimation in the presence of specific or matched network terminations.

Known reference measurements are using a Single-Ended Line Testing method, shortly called SELT or reflectometry, or are based on Dual-Ended Line testing parameters, called DELT.

Dual-ended line testing DELT is an automated way of testing a DSL line, relying on the parameters reported by the DSL modem installed at the customer's end of line. On the other hand, Single-ended Line testing SELT is an automated way of testing a DSL line from one end of the line, either from the central office CO or, less likely, from the subscriber's end. This means that SELT does not require a technician or any equipment at the subscriber site.

DELT and SELT methods are disclosed in EP 1 936 931 A1.

However, in view of domain separation, both methods do suffer from different drawbacks.

Indeed, in order to perform DELT, the customer premise equipment CPE (See Figure 1) needs to be connected to the line and needs to be able to measure and communicate with the central office CO. The line is hereby terminated with rather matched impedance and the signals have to pass through various analogue filters (internal filter of CPE-side modem, DSL splitter at CPE-side, DSL splitter at CO-side and internal filter of CO-side modem). However, these components introduce distortions in the attenuation measurements whereby the loop length estimation is corrupted. Moreover, since these kinds of errors are varying between different CPE vendors, such errors are difficult to be compensated. Also, as mentioned above, when the CPE is not able to communicate i.e. the CPE is not in show time, the DELT reference data is not at all available.

In the event of using SELT, other problems arise. In the event when the calibration process, which implies the calibration of the Central Office CO analog front-end as well as the line physical parameters, have not been performed carefully, systematic errors appear in the reference measurement and inference about the fault location and the domain separation can be determined wrongly. Furthermore, a SELT method is not the most suitable to identify terminations, especially for long loops. Indeed, a matched termination strongly attenuates the reflected signal and it is not an easy problem to discriminate if this extra attenuation comes from a longer loop or from a matched termination. Therefore, performing a SELT measurement is not possible when the line is terminated by a DSL modem. The DSL modem should be physically disconnected to get a proper measurement. Finally, in order to launch SELT analysis, and since it performs the measurements in the DSL-frequencies band when using reflectometry, interruption of the services should be required and again the DSL modem should be physically disconnected to get a proper measurement.

The object of the present application is to provide a method as claimed in claim 1 and a physical fault domain determination module as claimed in claim 5 to determine a physical fault domain in a digital subscriber line access network without above mentioned drawbacks.

According to the invention, this object is achieved due to the insight of firstly, using a Metallic Line Testing method MELT as known from *the ITU-T Standard SERIES G: TRANSMISSION SYSTEMS AND MEDIA, DIGITAL SYSTEMS AND NETWORKS - Digital sections and digital line system - Access networks with reference ITU-T G.996.2, and more specific its Annex E - Specific requirements for a MELT-PMD and Annex F - Specific requirements for a MELT-P.* This -Metallic Line Testing method MELT is used for determination of the required reference measurement i.e. determination of a metallic line testing domain separation reference, and secondly embedding the MELT testing module on the same Digital Subscriber Line board as the selected module that is used for detection of a fault location for a eventual fault on the line i.e. a SELT module.

In this way a method to determine a physical fault domain in a digital subscriber line access network comprises the steps according to claim 1. According to a further aspect a physical fault domain determination module is provided according to claim 5.

Indeed, since Metallic Line Testing MELT approach carries out the measurements of electrical parameters in the telephonic-frequencies band according to a low-frequencies line model, the DSL services are not impacted i.e. no interruption of the DSL services is required. Moreover, based on the collection of common-mode parameters, the loop length is estimated in a reliable way and independently of the termination, even for longer loops. The metallic line testing domain separation reference can be calculated based upon e.g. the MELT loop length reference estimation. A unique benefit of this MELT reference measurement over the known SELT or DELT reference solutions is that based upon these metallic line testing measurements the unimpaired-loop length is estimated independently of the line termination and without any DSL service interruptions. This allows that a better distinction can be made between the network fault domain and the in-house fault domain.

Moreover, by embedding the metallic line testing module on the Digital subscriber Line board together with the single ended line testing module, a more reliable and accurate comparison of the domain separation reference, based upon the metallic line testing measurements, and the fault location, based upon the collected single ended line testing measurements, is realized. Indeed, the measurements for the different loop lengths are collected in a common way on a common board. External Metallic Line Testing test heads are expensive and need to be physically connected to each copper line through a switch-matrix. At least one test head is needed in every central office. In a Fiber-to-the-cabinet FTTC deployment scenario, which is typically for VDSL2, the copper pairs stop in the remote cabinet which is connected directly via an optical fiber to the operator network. In such a scenario, at least one test head would be need in every remote cabinet, which makes the overall solution very costly and cumbersome. By integrating the MELT functionality in a chipset on the DSL board, MELT measurements become possible from all remote cabinets with no need of an external test head. Moreover, the known test heads, located external to DSL boards, that are capable of performing Metallic Line Testing solutions are usually using mechanical switches and do require hereby DSL service interruption. This kind of data measurement collection in an external tool requires on-top processing and a more complex diagnosis engine.

As mentioned before, and due to the use of a lower frequency band for this metallic line testing method, the execution of the step of collecting the metallic line testing measurements can easily be performed during active service of the access network i.e. the provided service doesn't have to be interrupted while the MELT testing is going on. According to a preferred embodiment the MELT measurements are indeed executed during active service of the access network before an eventual occurrence of a fault. In this way, based upon the collected MELT measurements, the calculation of a
value for a metallic line testing domain separation reference can be executed in parallel during active service of the network.

It has to be explained that the metallic line testing module performs at least the step of collecting metallic line testing measurements. However, the step of determining based upon the metallic line testing measurements a metallic line testing domain separation reference is not necessarily performed by the test module itself and can be performed as well by means of components outside the DSL board. Furthermore, it has to be explained that the single ended line testing module, usually implemented by means of the basic Digital Subscriber Line integrated circuits, performs at least the step of collecting single ended line testing measurements. However, the step of determining based upon the collected single ended line testing measurements a fault location is not necessarily performed by the test module itself and can be performed as well by means of components outside the DSL board. The aim is that both test modules that perform the collection of its respective testing measurements are embedded on an identical Digital Subscriber Line board.

A further preferred implementation of the present method and module is that the step of collecting metallic line testing measurements is repeated on a regular base. Hereby the drifting of particular line-parameters can be monitored and tracked.

Moreover, and according to a further preferred embodiment, the physical fault domain determination module determines the metallic line testing domain separation reference on a regular base whereby a regular updated value for the metallic line testing domain separation reference remains accurate and in line with the condition of the network.

Finally, it has to be mentioned that the comparison of single ended line testing measurement to a previous determined metallic line testing domain separation reference is a combination made by purpose. The reasons why metallic line testing measurements are preferred for determination of the domain separation reference have been explained above. Also the reason why it is important to embed the metallic line testing module on the same DSL board as the module to be used for the fault location measurements. But also the selection of single ended line testing for location of an eventual fault has been done with purpose.

Indeed, other combinations are possible such as e.g. comparing a metallic line testing measurement with the previous metallic line testing reference or comparing
a single ended line testing measurement with a previous single ended line testing reference. However, according to such combinations, several types of faults are not detectable and/or cannot be located. The below Table gives a summary of the possibilities offered by the different kind of approaches. Different characteristics, as well related to the measuring method for determination of the domain separation as related for detection of different kinds of faults, are listed in the table and are analyzed for different possible combinations. Preferred embodiments are covered by the dependent claims.

| **Characteristic** | MELT-Ref + MELT | SELT-Ref + SELT | DELT-Ref + SELT | MELT-Ref + SELT |
|---|---|---|---|---|
| Open loop length reference | Yes | No (1) | No | Yes |
| Terminated loop length reference | Yes | Only for short loops (2) | Only in show time (3) | Yes |
| No DSL service interruption during reference measurement | Yes | No | Yes | Yes |
| Differential mode short-circuit location | No | Yes | Yes | Yes |
| Short-fault-to-ground location | No | Yes | Yes | Yes |
| One-wire-open fault location | Yes | Yes | Yes | Yes |

With:
"MELT-Ref' or "SELF-Ref' or "DELT-Ref' the selected kind of line testing for determination of the domain separation reference; and
"+ MELT" or "+SELT" the selected kind of line testing for determination of the location of the fault.

And with Notes:
(1) Except if the CPE is physically disconnected from the line, which is not possible in practice, for an existing network; and
(2) Depending on the performance of the SELT module; and
(3) accuracy furthermore impacted by analogue filters.

When taking into account the above reasons for selecting firstly MELTref and further analysis of the different combinations with MELTref, the best results are given for the combination of MELTref with SELT.

It is to be noticed that the term 'comprising', used in the claims, should not be interpreted as being limitative to the means listed thereafter. Thus, the scope of the expression 'a device comprising means A and B' should not be limited to devices consisting only of components A and B. It means that with respect to the present invention, the only relevant components of the device are A and B.

The above and other objects and features of the invention will become more apparent and the invention itself will be best understood by referring to the following description of an embodiment taken in conjunction with the accompanying drawings wherein:
Figure 1 shows a schematic view of an access network with the different domains i.e. network domain and in-house domain; and
Figure 2 shows a schematic view of a physical fault domain determination module with active metallic line testing module in a digital subscriber line access network; and
Figure 3 shows a schematic view of a physical fault domain determination module with active single ended line testing module in a digital subscriber line access network.

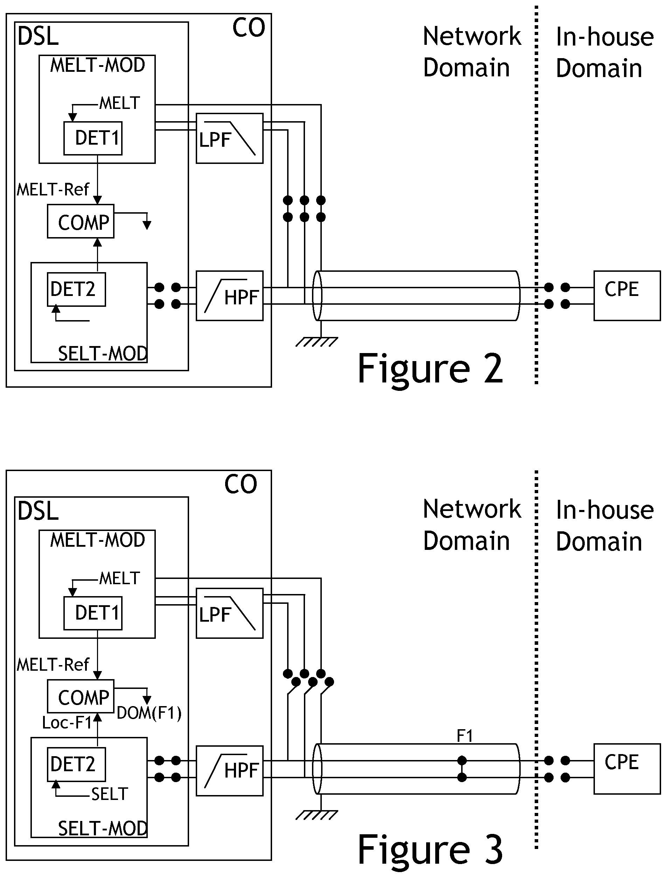

The working of the physical fault domain determination module according to the present invention in accordance with its telecommunication environment that is shown in Figures 2 and Figure 3 will be explained by means of a functional description of the different blocks shown therein. Based on this description, the practical implementation of the blocks will be obvious to a person skilled in the art and will therefor not be described in details. In addition, the principle working of the method to identify impairments in telecommunication lines will be described in further detail.

Figure 1 represents a schematic view of an access network with the different domains i.e. network domain and in-house domain. A central office CO is coupled via a physical link i.e. a Digital Subscriber Line DSL to a Customer Premises Equipment CPE in a home. As explained above, it is important to an operator to be able to remotely diagnose the sources of physical problems in its access network. One of the basic concepts is to detect the presence of a fault on the line and to determine whether this fault is present in-house of the customer or in the operator's network. This domain separation is shown in Figure 1. For the determination of a physical fault domain in a digital subscriber network, a domain separation reference needs to be determined i.e. a reference Ref. In order to determine the Reference Ref, a reference measurement is performed by means of loop length estimation.

A first way to perform the reference measurements is by means of Dual Ending Line Testing whereby the measurements of the line conditions are performed at both ends of the line.

Another way to perform the reference measurement is by means of the traditional Single Ended Line Testing SELT. An input signal, also called incident signal, is applied to the DSL line and an echo signal is measured. The obtained measurements are called reflectogram. At any, even light, impedance change of the line, the reflected echo level varies, which will appear as a 'peak' or a 'valley' in the echo measurement. When using this technique, any impairment such as bad contact, a bridge tap or wire gauge change becomes visible in the reflectogram. Once the time-domain echo is measured, the distance to the fault can be calculated. Indeed, when knowing the velocity of the electric signal on the line and keeping in mind that the distance covered by the signal is twice the distance to the fault, since the signal has to go to the event and come back to the emitter, the distance to the fault can be determined.

It has to be understood that this reference measurement is executed upon an unimpaired access network. Once a fault occurs in the access network e.g. F1 or F2, the location of the fault in the access network is as well estimated and is compared to the previously determined Reference Ref. i.e. the physical fault domain of the fault is determined to be the network domain (for F1) or the in-house domain (for F2). Depending of this physical fault domain, the operator is enabled to perform the right approach for dealing with the actual fault.

So, known existing solutions are using SELT or DELT measurements as reference and compare the reference with respect to a SELT analysis launched when a fault occurs.

However, in the case of DELT references, show time is required and analogue filters effects are not always compensated, which introduce extra errors.

When using a SELT reference, especially for long and/or terminated loops, the loop length is not very accurately estimated and the DSL services have to be interrupted. Hereby, the reference is imprecise and domain separation is not trustable.

Referring to Figure 2 and as mentioned above, a schematic view of a physical fault domain determination module with active metallic line testing module in a digital subscriber line access network is shown.

A customer premises equipment CPE is coupled via a digital subscriber line to digital subscriber line board DSL in central office CO of a digital subscriber line access network. The DSL board comprises a metallic line testing module MELT-MOD and a single ended line testing module SELT-MOD both coupled to the DSL line of the customer premises equipment CPE. It has to be explained here that one of the tasks of the single ended line testing module is performed by the DSL chip set of the DSL board itself.

The metallic line testing module is coupled to the DSL line via a low pass filter LPF since the metallic line testing measurements are performed in the lower telephonic frequency band. The single ended line testing module is coupled to the DSL line via a high pass filter HPF since the single ended line testing measurements are performed in the higher DSL frequency bands.

It has to be explained that the idea is indeed to have both modules on an identical DSL board for reasons as explained above.

Furthermore, a comparator COMP is coupled between both testing modules MELT-MOD and SELT-MOD. This comparator is in Figure 2 and Figure 3 also shown as part of the DSL board. However, the location of the comparator might as well be outside the DSL board e.g. in order to execute its function to serve different kind of DSL boards.

The metallic line testing module MELT-MOD comprises a first determiner DET1 being coupled to the comparator. The single ended line testing module comprises a second determiner DET2 also being coupled to the comparator.

It has to be remarked here again that the first determiner DET1 and the second determiner DET2 are not necessarily part of its respective testing module MELT-MOD and SELT-MOD. Indeed, the determination of the respective metallic line testing domain separation reference and the fault location, i.e. the interpretation of the testing measurements might as well be performed outside the DSL board.

Referring to Figures 2 and 3, the solution of the present application will be explained for a fault F1 in the DSL line.

The method to determine a physical fault domain in a digital subscriber line access network for a particular fault requires firstly a particular design step and secondly one or more measurements steps before the particular fault e.g. F1 occurs.

The particular design step, as explained above, requires the embedding of the metallic line testing module with the single ended line testing module on an identical Digital Subscriber Line board DSL. Due to this integration more accurate measurements are performed i.e. the measurements are performed in a comparable hardware environment whereby comparison of the test results provides more accurate results.

Next, the metallic line testing module MELT-MOD collects metallic line testing measurements MELT. Figure 2 shows that the coupling from the DSL line to the metallic line testing module is closed. As explained above, due to the fact that MELT measurements are performed in the lower telephonic frequency band, the measurements can be easily performed during active service of the access network before e.g. occurrence of a fault. This is also a preferred implementation whereby the measurements can easily be repeated on a regular base.

A next step is that based upon the collected metallic line testing measurements MELT a metallic line testing domain separation reference MELT-Ref is determined by means of the first determiner DET1 (shown in Figure 2). This metallic line testing domain separation reference MELT-Ref provides a separation of the access network into two domains i.e. the network domain and the in-house domain. It has to be understood that for each in-house network with its customer premises equipments such a domain separation reference can be determined. The Figures 1, 2 and 3 are only showing one particular situation.

According to the preferred embodiment whereby the measurements are performed upon a regular base, also this step of determining the metallic line testing domain separation reference MELT-Ref is repeated on a regular base in order to update a value for the metallic line testing domain separation reference MELT-Ref.

So, practically, during the metallic line testing measurements MELT, the common- and differential-mode line parameters such as the capacitances are measured. In the event when these values lie within their expected ranges, the values are considered useful and a loop length estimation, based on these values, is computed by the first determiner DET1 and is defined as the metallic line testing domain separation references MELT-Ref. As long as these parameters are available, the MELT-Ref is slowly updated without any DSL service interruptions. It has to be remarked that the metallic line testing approach has the ability to reliably estimate the loop length in the presence of customer premises equipment CPE with its own (matched) impedance which is indeed connected to the access network. This ability makes that MELT measurements are reflecting the realistic situation and are very suitable for making the distinction between operator's network and in-house domain.

Referring to Figure 3 the same digital subscriber line access network is shown but at a later time moment i.e. a fault F1 on the DSL line occurred and is shown. As a matter of example a differential short-circuit in the twisted pair of the DSL line to the respective CPE is shown. After occurrence of the fault F1, the single ended line testing module SELT-MOD collects single ended line testing measurements SELT. As explained above, single ended line measurements do require interruption of delivery of the services to the CPE since the measurements are taking place in the similar bandwidth as the delivery of the services between the CO and the CPE. However, due to occurrence of the fault F1, the quality of the services to the customer premises equipment CPE became worse or the services were even completely interrupted.

Based upon the collected single ended line testing measurements SELT the second determiner DET2 determines a fault location Loc-F1 for the fault F1 (shown in Figure 3).

According the present embodiment, the metallic line testing domain separation reference MELT-Ref is provided by the first determiner DET1 to the comparator COMP and the fault location value Loc-F1 for the fault F1 is provided by the second determiner DET2 to the comparator COMP.

The comparator COMP executes hereby a comparison of both values (MELT-Ref versus Loc-F1) and determines the physical fault domain for the fault F1. According to the present example the determined value Loc-F1 will be smaller as the value of MELT-Ref whereby the conclusion can be derived that the fault F1 occurs in the network domain and whereby the operator can take the appropriate measures to repair the fault in the domain network.

It has to be explained here that the comparison as such of the two values Loc-F1 and MELT-Ref might as well be executed by a technician to whom both values are shown on a screen i.e. the first determiner DET1 and the second determiner DET2 are forwarding these values to this screen, and whereby the technician after determination of the physical fault domain can initiate immediately the appropriate actions.

So, practically, once a fault appears on the line, such as for example here the short circuit F1 between the two wires of the DSL pair i.e. a fault in differential mode, the DSL services are stopped whereby the MELT measurement become defective between the two wires. Further on, the SELT measurements are launched in order to potentially detect and localize the fault F1. In this example, the fault type and fault location are estimated using reflectometry SELT and inference about its position in the access network is trustworthy. This position is compared to the previous MELT-Ref whereby also the position in the respective domain is trustworthy.

It has to be remarked here that the value for metallic line testing domain separation reference MELT-Ref is not necessarily stored on the DSL board itself. Indeed, small modifications to this described embodiment can be applied in order to realize an embodiment where the value for the MELT-Ref is stored outside the DSL board.

It finally as to be remarked the determination of the location of the fault for this example F1 would not have been possible by using metallic line testing measurements MELT or dual ended line testing measurements DELT.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is made only by way of example and not as a limitation on the scope of the invention, as defined in the appended claims.

## Claims

1. A method to determine a physical fault domain in a digital subscriber line access network,
said method being for detecting whether a fault is located in the operator's network (Network Domain) or in the customer's house (In-house Domain)
whereby said method is carried out by a metallic line testing module (MELT-MOD) and a single ended line testing module (SELT-MOD) embedded on an identical Digital Subscriber Line board
using a Metallic Line Testing methods (MELT) as defined in the ITU-T Standard Series G: TRANSMISSION SYSTEMS AND MEDIA, DIGITAL SYSTEMS AND NETWORKS - Digital sections and digital line system - Access networks with reference ITU-T G.996.2,
said method comprising:
- collecting metallic line testing measurements (MELT) by means of a metallic line testing module (MELT-MOD) ; and
- determining based upon said metallic line testing measurements (MELT) a metallic line testing domain separation reference (MELT-Ref); and
- collecting single ended line testing measurements (SELT) by means of said single ended line testing module (SELT-MOD); and
- based upon said collected single ended line testing measurements (SELT) determining, in the event of a fault occurrence (F1) in said access network, a fault location (Loc-F1) of said fault (F1) for comparison with said domain separation reference (MELT-Ref) and determination of a physical fault domain for said fault.

2. The method of claim 1, **characterized in that** said method further comprises executing said step of collecting said metallic line testing measurements (MELT) during active service of said access network before occurrence of said fault (F1).

3. The method of claim 2, **characterized in that** said method further comprises repeating execution of said step of collecting on a regular base.

4. The method of claim 3, **characterized in that** said method further comprises repeating execution of said step of determining said metallic line testing domain separation reference (MELT-Ref) on a regular base in order to update a value for said metallic line testing domain separation reference (MELT-Ref).

5. A physical fault domain determination module adapted to determine a physical fault domain in a digital subscriber line access network,
said module being adapted to detect whether a fault is located in the operator's network (Network Domain) or in the customer's house (In-house Domain)
said module comprising :
- a metallic line testing module (MELT-MOD) for collecting metallic line testing measurements (MELT) using a Metallic Line Testing method (MELT) as defined in the ITU-T Standard Series G: TRANSMISSION SYSTEMS AND MEDIA, DIGITAL SYSTEMS AND NETWORKS - Digital sections and digital line system - Access networks with reference ITU-T G.996.2; and
- a Digital Subscriber Line board (DSL) that comprises said metallic line testing module (MELT-MOD) and a single ended line testing module (SELT-MOD) for collecting single ended line testing measurements (SELT); and
- a first determiner (DET1) for determining based upon said metallic line testing measurements (MELT) a metallic line testing domain separation reference (MELT-Ref); and
- in the event of a fault occurrence (F1) in said access network, a second determiner (DET2) for determining based upon said collected single ended line testing measurements a fault location (Loc-F1) of said fault (F1) for comparison of said fault location (Loc-F1) with said domain separation reference (MELT-REf) and determination of a physical fault domain for said fault (F1).

6. The physical fault domain determination module of claim 5, **characterized in that** said metallic line testing module (MELT-MOD) being enabled to execute said collecting during active service of said access network before occurrence of said fault (F1).

7. The physical fault domain determination module of claim 6, **characterized in that** said metallic line testing module (MELT-MOD) being enabled to execute said collecting on a regular base.

8. The physical fault domain determination module of claim 7, **characterized in that** said first determiner (DET1) being enabled to execute said determination of said metallic line testing domain separation reference (MELT-Ref) on a regular base.

## Patentansprüche

1. Verfahren zum Bestimmen eines physischen Fehlerbereichs in einem digitalen Teilnehmeranschlussleitungs-Zugangsnetzwerk,
wobei besagtes Verfahren dazu dient, zu erkennen, ob sich der Fehler im Betreibernetzwerk (Netzwerkbereich) oder im Haus des Kunden (hausinterner Bereich) befindet,
wobei besagtes Verfahren durchgeführt wird mittels eines Metallleitungs-Testmoduls (MELT-MOD) und eines einseitigen Leitungstestmoduls (SELT-MOD), eingebettet auf einer identischen Digitalen Teilnehmeranschlussleitungs-Platte,
unter Verwendung eines Metallleitungs-Testverfahrens (MELT), wie definiert im ITU-T-Standard des Bereichs G: "TRANSMISSION SYSTEMS AND MEDIA, DIGITAL SYSTEMS AND NETWORKS - Digital sections and digital line system - Access networks" mit der Referenz ITU-T G.996.2,
wobei besagtes Verfahren umfasst:
- Erfassen von Metallleitungs-Testmesswerten (MELT) mittels eines Metallleitungs-Testmoduls (MELT-MOD); und
- Bestimmen einer Metallleitungs-Testbereich-Trennungsreferenz (MELT-Ref) beruhend auf besagten Metallleitungs-Testmesswerten (MELT); und
- Erfassen von einseitigen Leitungstestmesswerten (SELT) mittels besagtem einseitigen Leitungstestmodul (SELT-MOD); und
- beruhend auf besagten erfassten einseitigen Leitungstestmesswerten (SELT) das Bestimmen, im Fall eines Auftretens eines Fehlers (F1) in besagtem Zugangsnetzwerk, eines Fehlerortes (Loc-F1) des besagten Fehlers (F1) zum Vergleichen mit besagter Bereichstrennungsreferenz (MELT-Ref) und das Bestimmen eines physischen Fehlerbereichs für besagten Fehler.

2. Verfahren nach Anspruch 1, **dadurch gekennzeichnet, dass** besagtes Verfahren weiter das Ausführen von besagtem Schritt des Erfassens von besagten Metallleitungs-Testmesswerten (MELT) während des aktiven Dienstes des besagten Zugangsnetzwerks vor dem Auftreten des besagten Fehlers (F1) umfasst.

3. Verfahren nach Anspruch 2, **dadurch gekennzeichnet, dass** besagtes Verfahren weiter das wiederholte Ausführen von besagtem Schritt des Erfassens in regelmäßigen Abständen umfasst.

4. Verfahren nach Anspruch 3, **dadurch gekennzeichnet, dass** besagtes Verfahren weiter das wiederholte Ausführen von besagtem Schritt des Bestimmens besagter Metallleitungs-Testbereich-Trennungsreferenz (MELT-Ref) in regelmäßigen Abständen umfasst, um einen Wert für besagte Metallleitungs-Testbereich-Trennungsreferenz (MELT-Ref) zu aktualisieren.

5. Physisches Fehlerbereichs-Bestimmungsmodul, angepasst zum Bestimmen eines physischen Fehlerbereichs in einem digitalen Teilnehmeranschlussleitungs-Zugangsnetzwerk,
wobei besagtes Modul angepasst ist, um zu erfassen, ob sich der Fehler im Betreibernetzwerk (Netzwerkbereich) oder im Haus des Kunden (hausinterner Bereich) befindet,
wobei besagtes Modul umfasst:
- ein Metallleitungs-Testmodul (MELT-MOD) zum Erfassen von Metallleitungs-Testmesswerten (MELT) unter Verwendung eines Metallleitungs-Testverfahrens (MELT) wie definiert in den ITU-T-Standards des Bereichs G: "TRANSMISSION SYSTEMS AND MEDIA, DIGITAL SYSTEMS AND NETWORKS - Digital sections and digital line system - Access networks" mit der Referenz ITU-T G.996.2; und
eine Digitale Teilnehmeranschlussleitungs-Platte (DSL), umfassend besagtes Metallleitungs-Testmodul (MELT-MOD) und ein einseitiges Leitungstestmodul (SELT-MOD) zum Erfassen von einseitigen Leitungstestmesswerten (SELT); und
- einen ersten Ermittler (DET1) zum Bestimmen einer Metallleitungs-Testbereich-Trennungsreferenz (MELT-Ref) beruhend auf besagten Metallleitungs-Testmesswerten (MELT); und
- im Fall eines Auftretens eines Fehlers (F1) in besagtem Zugangsnetzwerk einen zweiten Ermittler (DET2) zum Bestimmen, beruhend auf besagten erfassten einseitigen Leitungstestmesswerten, eines Fehlerorts (Loc-F1) von besagtem Fehler (F1), zum Vergleichen von besagtem Fehlerort (Loc-F1) mit besagter Bereichstrennungsreferenz (MELT-Ref) und die Bestimmung eines physischen Fehlerbereichs für besagten Fehler (F1).

6. Physisches Fehlerbereichs-Bestimmungsmodul nach Anspruch 5, **dadurch gekennzeichnet, dass** besagtes Metallleitungs-Testmodul (MELT-MOD) das besagte Erfassen während des aktiven Dienstes von besagtem Zugangsnetzwerk vor dem Auftreten des besagten Fehlers (F1) ausführen kann.

7. Physisches Fehlerbereichs-Bestimmungsmodul nach Anspruch 6, **dadurch gekennzeichnet, dass** besagtes Metallleitungs-Testmodul (MELT-MOD) das besagte Erfassen in regelmäßigen Abständen ausführen kann.

8. Physisches Fehlerbereichs-Bestimmungsmodul nach Anspruch 7, **dadurch gekennzeichnet, dass** der erste Ermittler (DET1) besagte Bestimmung von besagter Metallleitungstestbereich-Trennungsreferenz (MELT-Ref) in regelmäßigen Abständen ausführen kann.

## Revendications

1. Procédé de détermination d'un domaine de défaut physique dans un réseau d'accès de ligne d'abonné numérique,
ledit procédé étant destiné à détecter si un défaut est localisé dans le réseau de l'opérateur (Domaine de réseau) ou au domicile du client (Domaine à domicile)
ledit procédé étant effectué par un module de test de ligne métallique (MELT-MOD) et un module de test de ligne sur extrémité locale (SELT-MOD) incorporé sur une carte de Ligne d'abonné numérique identique
en utilisant un procédé de Test de ligne métallique (MELT) tel que défini dans la norme UIT-T Série G : SYSTÈMES ET SUPPORTS DE TRANSMISSION, SYSTÈMES ET RÉSEAUX NUMÉRIQUES - Sections numériques et système de ligne numérique - Réseaux d'accès portant la référence UIT-T G.996.2,
ledit procédé comprenant les étapes suivantes :
- collecter des mesures de test de ligne métallique (MELT) au moyen d'un module de test de ligne métallique (MELT-MOD) ; et
- déterminer sur la base desdites mesures de test de ligne métallique (MELT) une référence de séparation de domaine de test de ligne métallique (MELT-Ref) ; et
- collecter des mesures de test de ligne sur extrémité locale (SELT) au moyen dudit module de test de ligne sur extrémité locale (SELT-MOD) ; et
- sur la base desdites mesures de test de ligne sur extrémité locale (SELT) collectées, déterminer, en cas d'occurrence de défaut (F1) dans ledit réseau d'accès, une localisation de défaut (Loc-F1) dudit défaut (F1) pour comparaison avec ladite référence de séparation de domaine (MELT-Ref) et détermination d'un domaine de défaut physique pour ledit défaut.

2. Procédé selon la revendication 1, **caractérisé en ce que** ledit procédé comprend en outre l'exécution de ladite étape de collecte desdites mesures de test de ligne métallique (MELT) pendant le service actif dudit réseau d'accès avant l'apparition dudit défaut (F1).

3. Procédé selon la revendication 2, **caractérisé en ce que** ledit procédé comprend en outre la répétition de l'exécution de ladite étape de collecte sur une base régulière.

4. Procédé selon la revendication 3, **caractérisé en ce que** ledit procédé comprend en outre la répétition de l'exécution de ladite étape de détermination de ladite référence de séparation de domaine de test de ligne métallique (MELT-Ref) sur une base régulière afin de mettre à jour une valeur pour ladite référence de séparation de domaine de test de ligne métallique (MELT-Ref).

5. Module de détermination de domaine de défaut physique adapté pour déterminer un domaine de défaut physique dans un réseau d'accès de ligne d'abonné numérique,
ledit module étant adapté pour détecter si un défaut est localisé dans le réseau de l'opérateur (Domaine de réseau) ou au domicile du client (Domaine à domicile)
ledit module comprenant :
- un module de test de ligne métallique (MELT-MOD) pour collecter des mesures de test de ligne métallique (MELT) en utilisant un procédé de Test de ligne métallique (MELT) tel que défini dans la norme UIT-T Série G : SYSTÈMES DE TRANSMISSION ET SUPPORTS, SYSTÈMES NUMÉRIQUES ET RÉSEAUX - Sections numériques et système de ligne numérique - Réseaux d'accès avec la référence UIT-T G.996.2 ; et
une carte de Ligne d'abonné numérique (DSL) qui comprend ledit module de test de ligne métallique (MELT-MOD) et un module de test de ligne sur extrémité locale (SELT-MOD) pour collecter des mesures de test de ligne métallique sur extrémité locale (SELT) ; et
- un premier déterminateur (DET1) pour déterminer sur la base desdites mesures de test de ligne métallique (MELT) une référence de séparation de domaine de test de ligne métallique (MELT-Ref) ; et
- en cas d'occurrence de défaut (F1) dans ledit réseau d'accès, un second déterminateur (DET2) pour déterminer sur la base desdites mesures de test de ligne sur extrémité locale collectées, une localisation de défaut (Loc-F1) dudit défaut (F1) pour comparaison de ladite localisation de défaut (Loc-F1) avec ladite référence de séparation de domaine (MELT-Ref) et détermination d'un domaine de défaut physique pour ledit défaut (F1).

6. Module de détermination de domaine de défaut physique selon la revendication 5, **caractérisé en ce que** ledit module de test de ligne métallique (MELT-MOD) est activé pour exécuter ladite collecte pendant le service actif dudit réseau d'accès avant l'apparition dudit défaut (F1).

7. Module de détermination de domaine de défaut physique selon la revendication 6, **caractérisé en ce que** ledit module de test de ligne métallique (MELT-MOD) est activé pour exécuter ladite collecte sur une base régulière.

8. Module de détermination de domaine de défaut physique selon la revendication 7, **caractérisé en ce que** ledit premier déterminateur (DET1) est activé pour exécuter ladite détermination de ladite référence de séparation de domaine de test de ligne métallique (MELT-Ref) sur une base régulière.
